Europäisches Patentamt

European Patent Office

Office européen des brevets

(19)

(11)  **EP 1 142 147 B1**

(12)  # FASCICULE DE BREVET EUROPEEN

(45) Date de publication et mention
de la délivrance du brevet:
**09.07.2003   Bulletin 2003/28**

(51) Int Cl.⁷: **H04B 1/707**, H04L 27/233

(21) Numéro de dépôt: **99959505.1**

(22) Date de dépôt: **21.12.1999**

(86) Numéro de dépôt international:
**PCT/FR99/03220**

(87) Numéro de publication internationale:
**WO 00/039939 (06.07.2000 Gazette 2000/27)**

(54) **PROCEDE DE RECEPTION DE SIGNAUX A ETALEMENT DE SPECTRE AVEC CORRECTION DE DECALAGE EN FREQUENCE**

VERFAHREN ZUM EMPFANGEN VON SPREIZSPEKTRUMSIGNALEN MIT KORREKTUR DES FREQUENZVERSATZES

METHOD FOR RECEIVING SPECTRUM SPREAD SIGNALS WITH FREQUENCY OFFSET CORRECTION

(84) Etats contractants désignés:
**DE GB IT**

(30) Priorité:  **23.12.1998  FR 9816316**

(43) Date de publication de la demande:
**10.10.2001   Bulletin 2001/41**

(73) Titulaire: **COMMISSARIAT A L'ENERGIE ATOMIQUE**
**75752 Paris Cédex 15 (FR)**

(72) Inventeurs:
• **BOULANGER, Christophe**
**F-94200 Ivry sur Seine (FR)**
• **OUVRY, Laurent**
**F-38000 Grenoble (FR)**
• **PIAGET, Bernard**
**F-38610 Venon (FR)**
• **LATTARD, Didier**
**F-38680 Rencurel (FR)**

(74) Mandataire: **Poulin, Gérard et al**
**BREVALEX**
**3, rue du Docteur Lancereaux**
**75008 Paris (FR)**

(56) Documents cités:
**EP-A- 0 822 668**          **WO-A-96/22661**
**US-A- 5 271 034**          **US-A- 5 799 034**

## Description

### Domaine technique

La présente invention a pour objet un procédé de réception de signaux à étalement de spectre avec correction de décalage en fréquence. Elle trouve une application dans les transmissions numériques.

L'invention permet de corriger les effets dus à des décalages intempestifs en fréquence, quelle que soit l'origine de ces décalages. Le plus souvent, il s'agira d'un effet Doppler lié à la vitesse de déplacement du récepteur. Mais il pourrait s'agir aussi d'effets dus à un décalage en fréquence des oscillateurs locaux. Dans la description qui suit, on supposera que l'effet à corriger est un effet Doppler, sans que la portée de l'invention en soit réduite pour autant à ce cas.

### Etat de la technique antérieure

De nombreuses publications ont été faites sur la correction d'effet Doppler. On peut citer, par exemple, le brevet US-A-5 007 068 ainsi que l'article correspondant de M. K. SIMON et D. DIVSALAR intitulé « Doppler-Corrected Differential Detection of MPSK », publié dans la revue « IEEE Transactions on Communications », vol. 37, n° 2, Février 1989, pages 99 - 109. Ces documents décrivent une technique dans laquelle le décalage Doppler est déterminé sur une moitié de la période symbole. Le récepteur utilise pour cela deux circuits à retard d'une demi-période chacun, et un circuit d'estimation de l'effet Doppler connecté entre les deux circuits à retard. La correction s'effectue ensuite sur le signal démodulé habituel.

Cette technique est utilisable pour des modulations du type modulation de phase différentielle multiple (en abrégé MDPSK pour « M-ary Differential Phase Shift Keing »), mais n'est pas applicable aux transmissions à étalement de spectre où chaque symbole est multiplié par une séquence pseudo-aléatoire.

L'article de F. D. NATALI, intitulé « AFC Tracking Algorithms », publié dans la revue « IEEE Transactions on Communications, vol. COM-32, n° 8, Août 1984, pages 935 -947, décrit une technique dans laquelle on forme des préambules constitués de symboles connus, avant la transmission de l'information utile. On contrôle automatiquement la fréquence de travail (« Automatic Frequency Control » ou AFC) par une structure en boucle.

Cette technique n'est pas adaptée au cas où l'on transmet des blocs d'informations séparés par des blancs.

On peut citer encore, comme techniques de correction :

- l'utilisation de la double détection, qui s'affranchit de l'effet Doppler par un codage approprié (US-A-4 481 640) ;
- l'utilisation du principe du mélange de fréquence dans la partie radio des récepteurs (US-A-4 706 286) ;
- l'utilisation d'une boucle à verrouillage de phase (PLL) dans la partie radio (US-A-4 841 544) ;
- l'utilisation d'un mode dual avec débit accru (US-A-5 623 485).

Ces techniques sont en général onéreuses et complexes et ne tirent pas le meilleur parti des avantages de l'étalement de spectre, ni du traitement numérique des signaux. Le but de la présente invention est justement de remédier à ces inconvénients en proposant un procédé qui traite les signaux en bande de base (et non les signaux dans la partie radio) et qui est bien adapté au traitement numérique.

Le document EP-A-0 822 668 décrit un récepteur pour signaux à étalement de spectre dans lequel la correction d'effet Doppler est effectuée sur le signal en bande de base.

### Exposé de l'invention

De façon précise, l'invention a pour objet un procédé de réception de signaux à étalement de spectre avec correction de décalage en fréquence, dans lequel :

- on reçoit un signal comprenant un préambule formé d'une suite de symboles connus étalés en fréquence par une séquence pseudo-aléatoire, puis une suite de symboles d'information étalés en fréquence par ladite séquence pseudo-aléatoire,
- on forme un signal en bande de base à partir du signal reçu,
- on effectue une corrélation entre le signal en bande de base et la séquence pseudo-aléatoire au moins dans la partie du signal correspondant aux symboles d'information pour obtenir un signal de corrélation,
- on effectue une démodulation du signal de corrélation pour obtenir un signal de démodulation,
- on restitue les symboles d'information, procédé dans lequel la correction de décalage en fréquence comprend les étapes suivantes :

    a.dans une première étape, on traite le signal de démodulation dans la partie correspondant au préambule, pour estimer la période de la modulation affectant ce signal en raison du décalage en fréquence et on élabore un signal correcteur ayant cette période estimée,

b.dans une seconde étape, on corrige le signal avant ou après corrélation dans la partie correspondant aux symboles d'information, à l'aide dudit signal correcteur,

ce procédé étant caractérisé en ce que :

- on divise le signal en bande de base en deux composantes, une première composante (I) et une seconde composante (Q) en quadrature avec la première et on effectue une corrélation sur chacune de ces composantes pour obtenir deux composantes de corrélation CORR(I) et CORR(Q),
- on calcule un signal DOT qui est la somme de deux produits directs d'échantillons successifs des composantes de corrélation, et un signal CROSS qui est la différence de deux produits croisés d'échantillons successifs des composantes de corrélation,
- pour estimer la période (T) de la modulation, on calcule le rapport entre un signal CROSS et un signal DOT à chaque période symbole, on calcule l'arc dont la tangente est égale à ce rapport, on calcule l'inverse de cet arc et on multiplie par $\pi N/2$.

**Brève description des dessins**

- la figure 1 rappelle la structure générale d'un récepteur de signaux à étalement de spectre ;
- la figure 2 montre un signal de corrélation correspondant à un signal non affecté par l'effet Doppler ;
- la figure 3 montre ce même signal affecté d'un léger effet Doppler ;
- la figure 4 montre ce même signal mais avec un fort effet Doppler ;
- la figure 5 illustre la modulation sinusoïdale affectant un signal de corrélation du fait de l'effet Doppler et montre la période T de cette modulation ;
- la figure 6 est un schéma synoptique montrant l'estimation de la modulation Doppler à partir des signaux de démodulation DOT et CROSS ;
- la figure 7 illustre un mode de réalisation d'un bloc d'estimation de la période de modulation et de formation du signal de correction de l'effet Doppler ;
- la figure 8 illustre un mode de réalisation d'un circuit de correction de l'effet Doppler ;
- les figures 9A et 9B montrent un signal de corrélation avant et après correction pour la voie I ;
- les figures 10A et 10B montrent un signal de corrélation avant et après correction pour la voie Q ;
- les figures 11A et 11B montrent un signal de corrélation avant et après correction sur la voie I, avec du bruit gaussien ;
- les figures 12A et 12B montrent un signal de corrélation avant et après correction sur la voie Q, avec du bruit gaussien ;
- la figure 13 illustre schématiquement la structure d'un récepteur à suppression parallèle d'interférences et à pondération, avec correction de l'effet Doppler selon l'invention ;
- la figure 14 montre les variations du taux d'erreur de bits en fonction du rapport signal sur bruit et permet de comparer les performances d'un récepteur selon l'invention avec d'autres récepteurs de types connus.

**Exposé de modes particuliers de réalisation**

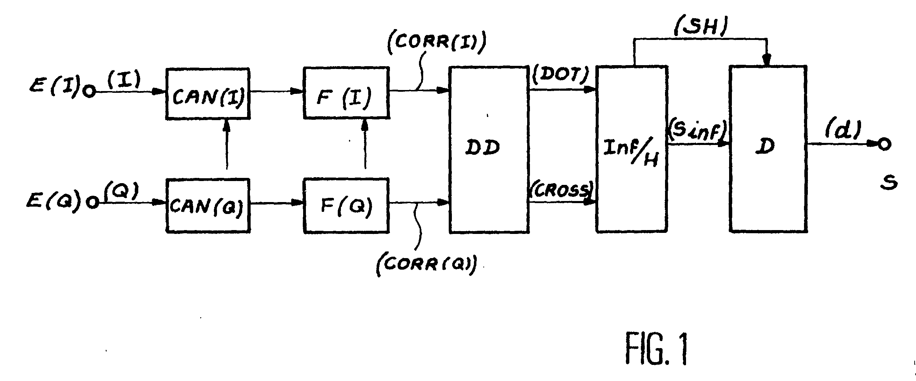

La figure 1 rappelle la structure générale d'un récepteur de signaux à étalement de spectre par séquence directe. A titre d'exemple, on suppose que la modulation effectuée à l'émission est une modulation différentielle de phase. Le récepteur comprend des moyens non représentés comme une antenne et des moyens pour passer en bande de base, c'est-à-dire pour multiplier le signal reçu par un signal ayant la fréquence de la porteuse. Le récepteur comporte de manière générale deux voies en parallèle, repérées par des indices I et Q, pour le traitement d'un signal en phase avec la porteuse et d'un signal en quadrature de phase avec celle-ci. Le récepteur représenté comprend ainsi deux entrées E(I), E(Q), deux convertisseurs analogique-numérique CAN(I), CAN(Q), deux circuits F(I), F(Q) délivrant deux signaux CORR(I) et CORR(Q), un circuit DD de démodulation différentielle délivrant deux signaux traditionnellement notés « DOT » et « CROSS » (qui sont des sommes ou des différences de produits d'échantillons en sortie de corrélation), un circuit Inf/H restituant un signal d'information Sinf et un signal d'horloge SH, et enfin un circuit de décision D dont la sortie S restitue les données d.

Les circuits F(I), F(Q) réalisent une opération de corrélation entre le signal reçu et la séquence pseudo-aléatoire utilisée à l'émission. Cette opération consiste à mémoriser un certain nombre d'échantillons successifs et à effectuer une somme pondérée à l'aide de coefficients qui sont les coefficients de l'étalement de spectre à séquence directe. Ces coefficients sont égaux à +1 et à -1, selon le signe des chips formant la séquence pseudo-aléatoire.

Les convertisseurs analogique-numérique CAN(I) et CAN(Q) fonctionnent à la fréquence $n_e F_c$ où $F_c$ est la fréquence des chips ($F_c = 1/T_c$), et $n_e$ est le nombre d'échantillons pris dans une période chip ($T_c$). Pour simplifier l'exposé, on supposera que l'on prend un échantillon par chip. Les signaux de corrélation CORR(I) et CORR(Q) contiennent un pic de corrélation par durée de symbole.

Quant aux signaux DOT et CROSS délivrés par le circuit de démodulation DD, on rappelle qu'il s'agit, pour le premier, de la somme $I_k I_{k-1} + Q_k Q_{k-1}$ et pour le second, de la différence $Q_k I_{k-1} - I_k Q_{k-1}$, où $I_k$ et $Q_k$ désignent les échantillons de corrélation de rang k pour les voies I et Q, le rang correspondant à une période symbole ($I_k$ correspond à CORR($I_k$) et $Q_k$ à CORR($Q_k$).

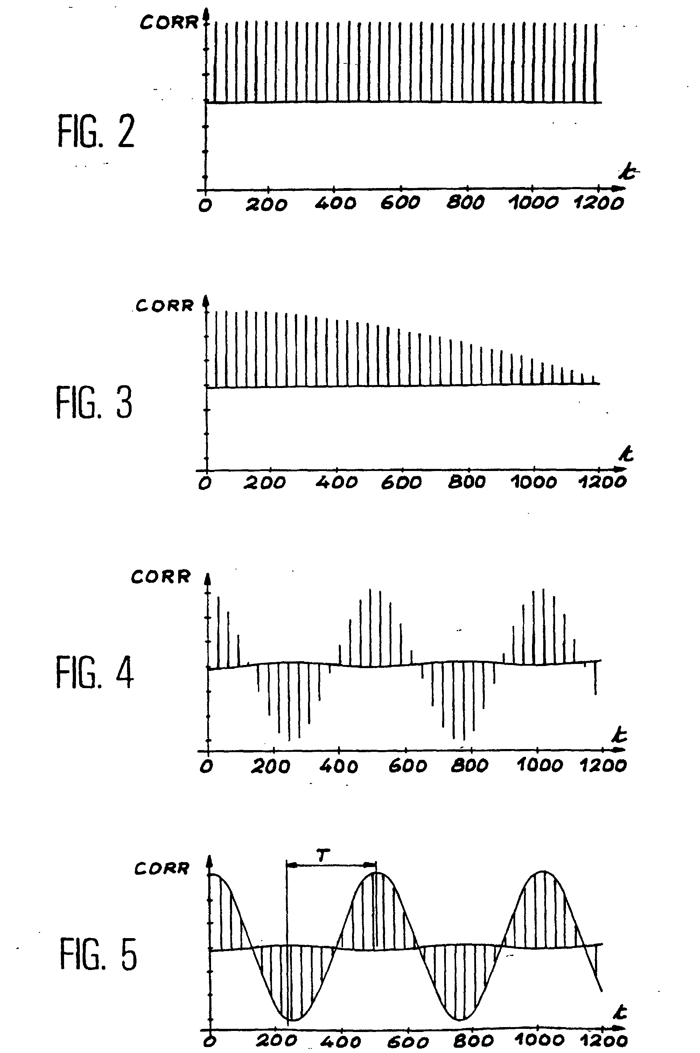

La figure 2 montre la suite des pics de corrélation dans le cas idéal d'un préambule constitué de données binaires toutes égales à +1, la transmission n'étant pas affectée par un effet Doppler. La figure 2 concerne aussi bien la voie I que la voie Q. En abscisses figure le temps compté en période chips. Les pics sont écartés les uns des autres de N chips. Dans le cas illustré, N = 31. Tous les pics sont de même amplitude, dans ce cas idéal, non bruité.

La figure 3 illustre le même cas, mais avec un léger effet Doppler, tandis que la figure 4 illustre le cas d'un fort effet Doppler. Le décalage en fréquence dû à l'effet Doppler se traduit par un décalage de phase du signal traité et par une modulation parasite du signal de corrélation.

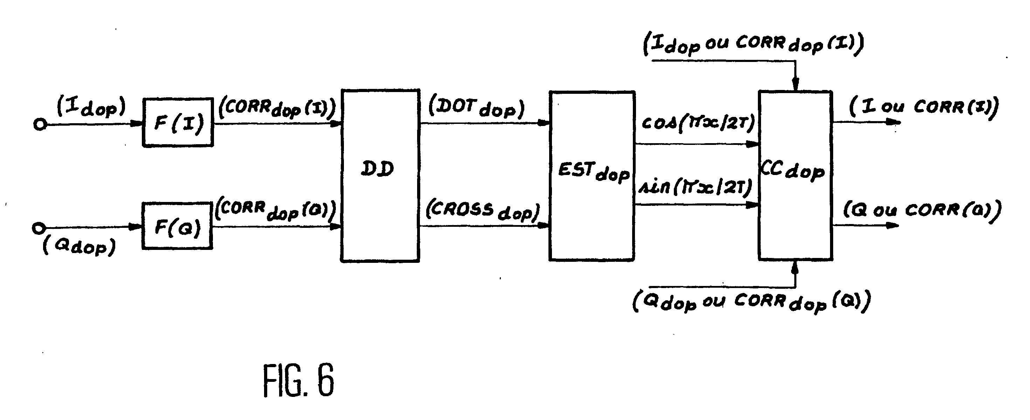

La figure 5 reprend, de manière plus précise, cette question et montre la modulation liée à la perturbation, avec sa demi-période notée T, qui est la durée (comptée en nombre de chips) séparant deux extrema successifs. La période totale de la modulation parasite est donc égale à 2T. Le procédé de la présente invention permet de corriger cette modulation parasite. Selon l'invention, on procède en deux temps : tout d'abord, on mesure la durée T, (ou son double 2T) ce qui permet d'élaborer un signal de correction ; ensuite, on corrige les signaux par ledit signal de correction.

Pour estimer la durée T (ou 2T), on utilise selon l'invention les signaux de corrélation sous leurs formes DOT et CROSS.

Pour effectuer la correction, on peut agir soit sur les signaux incidents, soit sur les signaux de corrélation. Il existe donc plusieurs variantes possibles qui sont illustrées sur les figures 6 à 8. Sur ces figures, les notations sont légèrement modifiées par rapport à celles de la figure 1, en ce sens que les signaux avant traitement portent un indice « dop », pour signifier qu'ils sont affectés d'un effet Doppler, les signaux après traitement étant débarrassés de cet indice.

Sur la figure 6, le circuit d'estimation de l'effet Doppler $EST_{dop}$ traite les signaux de démodulation $DOT_{dop}(I)$ et/ou $CROSS_{dop}(Q)$. La correction s'effectue soit sur $I_{dop}$ et $Q_{dop}$, soit sur $CORR_{dop}(I)$ et $CORR_{dop}(Q)$, dans le circuit $CC_{dop}$.

Pour déterminer la période T illustrée sur la figure 5 (ou 2T), on utilise les propriétés des signaux à traiter. On peut considérer, en effet, que les signaux de corrélation correspondant à un préambule sont formés des échantillons d'une cosinusoïde et d'une sinusoïde de demi-période T, échantillonnées tous les kN chips (cf figure 5). On peut donc écrire :

$$CORR_{dop}(I_k) = P.\cos(\pi kN/2T) \tag{1}$$

$$CORR_{dop}(Q_k) = P.\sin(\pi kN/2T) \tag{2}$$

où P est une amplitude.

Après démodulation différentielle, on obtient les signaux DOT et CROSS suivants :

$$DOT_{dop}(k) = CORR_{dop}(I_k).CORR_{dop}(I_{k-1}) + CORR_{dop}(Q_k).CORR_{dop}(Q_{k-1}) \tag{3}$$

$$CROSS_{dop}(k) = CORR_{dop}(Q_k).CORR_{dop}(I_{k-1}) - CORR_{dop}(I_k).CORR_{dop}(Q_{k-1}) \tag{4}$$

En remplaçant dans (3), (4) les quantités par leurs valeurs données par (1) et (2) et compte tenu des propriétés des fonctions trigonométriques, on trouve :

$$DOT_{dop}(k) = P^2 . \cos(\pi N/2T) \qquad (5)$$

$$CROSS_{dop}(k) = P^2 . \sin(\pi N/2T) \qquad (6)$$

On voit que les deux quantités $DOT_{dop}$ et $CROSS_{dop}$ sont indépendantes du rang k du symbole de préambule. En faisant le rapport de ces quantités, on forme la tangente de l'angle $\pi N/2T$ d'où l'on peut extraire l'angle et la valeur de T :

$$T = \frac{\pi N/2}{\text{arctg}(\dfrac{CROSS_{dop}(k)}{DOT_{dop}(k)})} \qquad (7)$$

où arctg(.) signifie « arc dont la tangente est égale à (.) (en notation anglo-saxonne : $\tan^{-1}$).

Le circuit d'estimation de l'effet Doppler $EST_{dop}$ de la figure 6 est donc simplement un circuit comprenant un diviseur des signaux A = $CROSS_{dop}$ et B = $DOT_{dop}$, un circuit de calcul de

$$\text{arctg}\left(\frac{A}{B}\right),$$

un inverseur et un multiplicateur par $N\pi/2$. Connaissant T, il reste à engendrer un signal de correction dont une composante Cc est en cosinus et l'autre Cs en sinus :

$$Cc = \cos(\pi x/2T) \qquad (8)$$

$$Cs = \sin(\pi x/2T) \qquad (9)$$

Un tel signal est engendré par un générateur à deux sorties en quadrature.

On peut modifier ce calcul en prenant une suite d'échantillons pondérés et calculer :

$$T = \frac{\pi N/2}{\text{arctg}\left[\dfrac{(1-\alpha)\sum\limits_{k=0}^{\infty}\alpha^k CROSS_{dop}(k)}{(1-\alpha)\sum\limits_{k=0}^{\infty}\alpha^k DOT_{dop}(k)}\right]} \qquad (10)$$

De façon plus générale encore, on améliore l'estimation de T en procédant à un filtrage passe-bas des signaux $DOT_{dop}$ et $CROSS_{dop}$, soit avec A=f($CROSS_{dop}(k)$) et B=f($DOT_{dop}(k)$), où f représente la fonction de filtrage :

$$T = \frac{\pi N/2}{\text{arctg }\dfrac{A}{B}} \qquad (11)$$

Un générateur recevant T délivre les composantes Cc et Cs définies par (8) et (9).

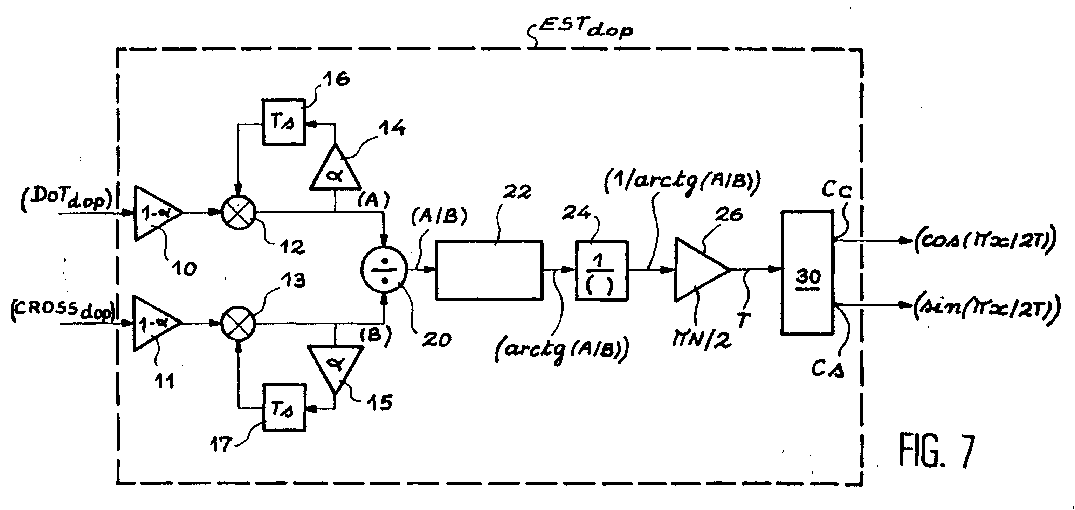

La figure 7 illustre un mode particulier de réalisation du circuit d'estimation. Ce circuit comprend deux amplificateurs 10, 11 de gain $(1 - \alpha)$, deux multiplicateurs 12, 13 dont la sortie est rebouclée sur une deuxième entrée par un amplificateur 14, 15 à travers une ligne à retard 16, 17. Le circuit se complète par des moyens pour appliquer la relation (11), à savoir un diviseur 20, un circuit 22 de calcul de l'arctangente, un circuit 24 qui calcule l'inverse de l'arctangente et un amplificateur 26 de gain πN/2 qui délivre la quantité T. Un générateur 30 recevant T délivre les composantes Cc et Cs définies par (8) et (9).

Ayant décrit les moyens d'obtention des deux composantes Cc et Cs du signal de correction, on va décrire maintenant comment on corrige en conséquence les signaux reçus. Cette correction traite les signaux véhiculant les informations transmises et non plus le préambule.

De manière générale, les signaux de corrélation CORR(I) et CORR(Q) des voies en phase et en quadrature peuvent être considérées comme les composantes réelles et imaginaires d'un signal complexe CORR(I) + jCORR(Q). L'effet Doppler change la phase de ce signal (autrement dit, fait tourner le vecteur le représentant) d'une quantité $e^{j(\pi x/2T)}$. Le signal obtenu est le signal affecté d'effet Doppler. Ses composantes sont $CORR_{dop}(I)$ et $CORR_{dop}(Q)$. On peut donc écrire :

$$CORR_{dop}(I) + jCORR_{dop}(Q) = [CORR(I) + jCORR(Q)]e^{j(\pi x/2T)} \tag{12}$$

Inversement, on peut exprimer les composantes débarrassées de l'effet Doppler par rapport aux composantes entachées d'effet Doppler par :

$$CORR(I) + jCORR(Q) = [CORR_{dop}(I) + jCORR_{dop}(Q)]e^{-j(\pi x/2T)} \tag{13}$$

En développant le second membre de cette équation et en identifiant les termes réels et imaginaires, on trouve :

$$\begin{cases} CORR(I)=CORR_{dop}(I).\cos(\pi x/2T)+CORR_{dop}(Q).\sin(\pi x/2T) & (14) \\ CORR(Q)=CORR_{dop}(Q).\cos(\pi x/2T)-CORR_{dop}(I).\sin(\pi x/2T) & (15) \end{cases}$$

On peut établir les mêmes relations avec les signaux I et Q soit :

$$[I + jQ] = [I_{dop} + jQ_{dop}]e^{-j(\pi x/2T)} \tag{16}$$

soit :

$$\begin{cases} I=I_{dop}.\cos(\pi x/2T)+Q_{dop}.\sin(\pi x/2T) & (17) \\ Q=Q_{dop}.\cos(\pi x/2T)-I_{dop}.\sin(\pi x/2T) & (18) \end{cases}$$

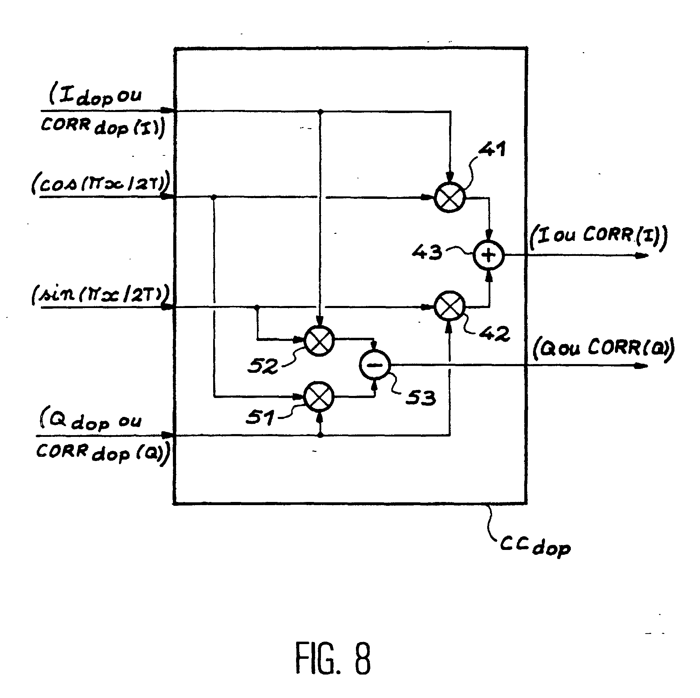

Le circuit de correction doit donc comprendre des multiplieurs pour multiplier les signaux à corriger par les deux composantes du signal de correction et des additionneurs pour faire la somme des produits obtenus. La figure 8 montre un exemple d'un tel circuit. Tel que représenté, il comprend deux multiplieurs 41 et 42 recevant respectivement $I_{dop}$ ou $CORR_{dop}(I)$ et $\cos(\pi x/2T)$ pour le premier et $Q_{dop}$ ou $CORR_{dop}(Q)$ et $\sin(\pi x/2T)$ pour le second, et un additionneur 43 relié aux deux multiplieurs pour délivrer le signal de la première voie corrigé de l'effet Doppler, c'est-à-dire I ou CORR(I). De manière similaire, le circuit comprend encore deux multiplicateurs 51 et 52 recevant respectivement $Q_{dop}$ ou $CORR_{dop}(Q)$ et $\cos(\pi x/2T)$ pour le premier et $I_{dop}$ ou $CORR_{dop}(I)$ et $\sin(\pi x/2T)$ pour le second et un additionneur 53 avec une entrée inverseuse (autrement dit un soustracteur), l'entrée inverseuse étant reliée au multiplicateur 52 et l'autre au multiplicateur 51. Cet additionneur 53 délivre le signal de la seconde voie corrigé de l'effet Doppler, c'est-à-dire Q ou CORR(Q).

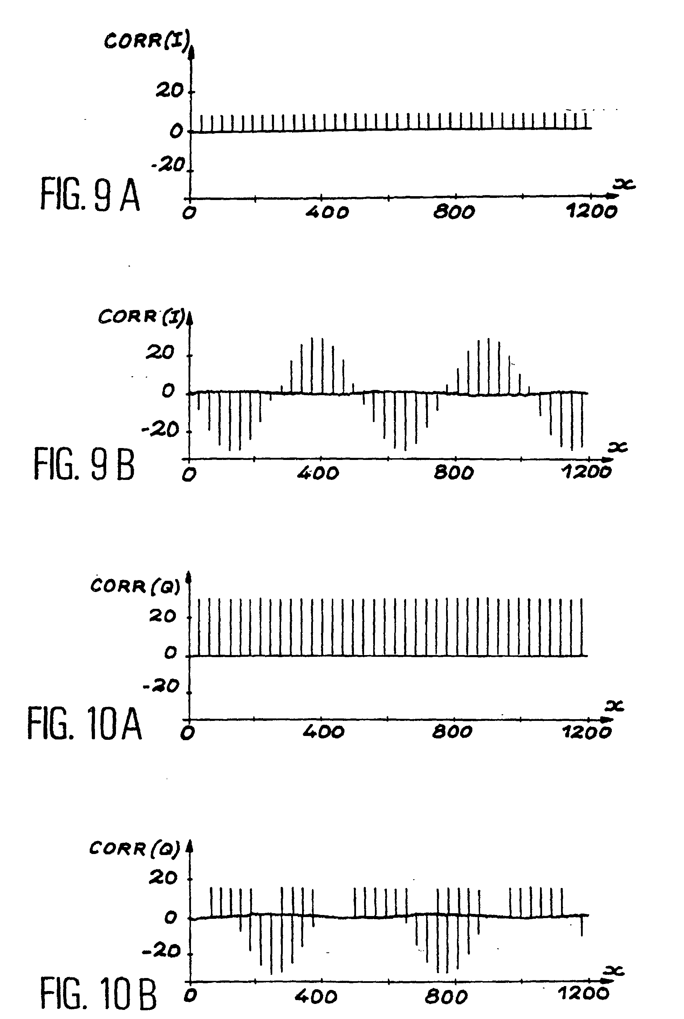

Les figures 9A, 9B et 10A, 10C, d'une part, ainsi que 11A, 11B et 12A, 12B, d'autre part, illustrent la correction qui vient d'être décrite.

Sur la figure 9B, tout d'abord, on voit un signal de corrélation de la voie I avant correction et affecté d'un effet Doppler. Sur la figure 9A, cet effet a été corrigé.

Sur les figures 10B et 10A, on voit les mêmes signaux avant et après correction, mais sur la voie Q.

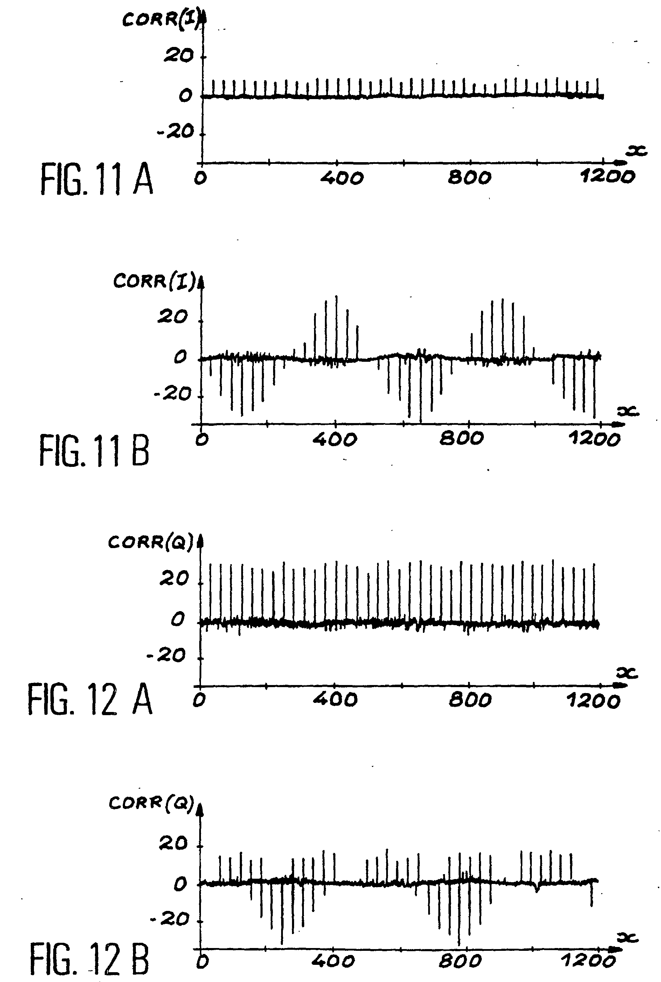

Les figures 11B, 11A et 12B, 12A montrent les mêmes signaux, mais en présence d'un bruit tel que le rapport signal sur bruit est de 5 dB.

L'invention n'est pas limitée au cas où l'on corrige à la fois la voie I et la voie Q. On peut fort bien corriger l'une ou l'autre de ces voies. Le circuit de correction mettra alors en oeuvre la partie des moyens permettant de calculer les expression (18) ou (19).

L'invention, qui vient d'être décrite, s'applique à tout type de récepteur de signaux à étalement de spectre par séquence pseudo-aléatoire. Elle peut s'appliquer, en particulier, aux transmissions dites à accès multiple à répartition par les codes (AMRC) (en anglais CDMA pour «Code Division Multiple Access»). Dans ces transmissions, plusieurs utilisateurs partagent un même canal grâce à des séquences pseudo-aléatoires différentes. Le récepteur comprend alors autant de voies en parallèle que d'utilisateurs. Dans un mode particulier de mise en oeuvre, un tel récepteur AMRC peut comprendre des moyens de suppression parallèle des interférences entre utilisateurs avec des moyens de pondération. Un tel récepteur est décrit dans une demande de brevet français déposée par le présent Demandeur le 24 mars 1998, sous le numéro 98 03586.

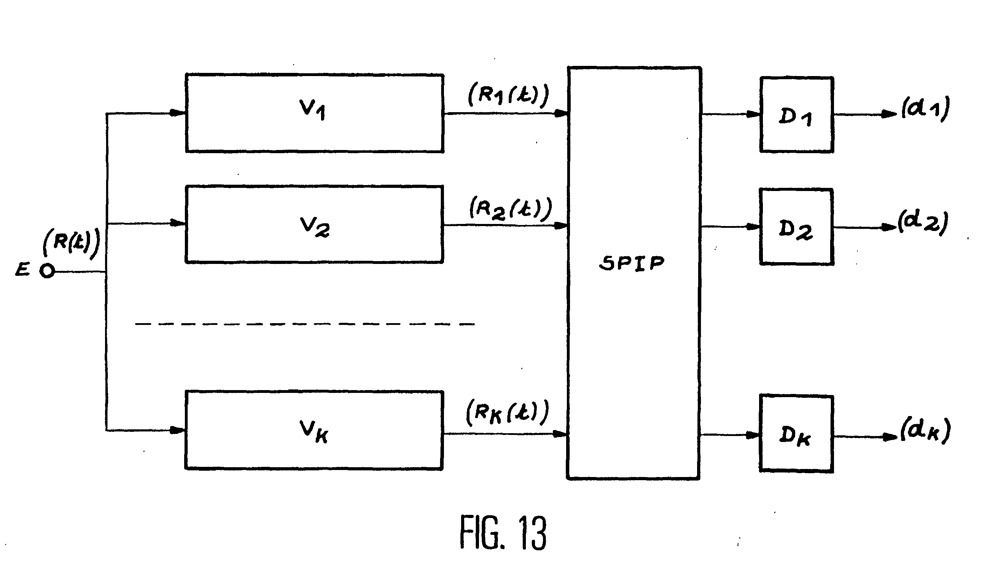

La figure 13 illustre schématiquement un _tel récepteur. Tel que représenté, il comprend une entrée générale E, recevant un signal composite R(t), K voies en parallèle $V_1$, $V_2$,..., $V_K$, où K est le nombre maximum d'utilisateurs, chaque voie délivrant un signal $R_1(t)$, $R_2(t)$,..., $R_k(t)$ propre à chaque utilisateur, un circuit SPIP de suppression parallèle d'interférences à pondération et K circuits de décision $D_1$, $D_2$,..., $D_K$ délivrant les données $d_1$, $d_2$,..., $d_K$ propres à chacun des utilisateurs.

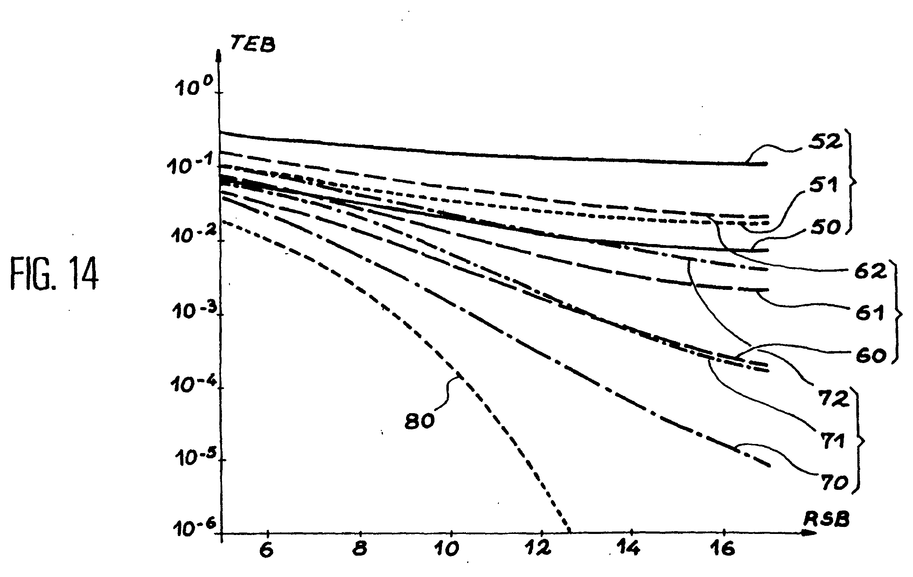

La figure 14, enfin, permet de comparer les performances d'un procédé de réception selon l'invention avec des procédés classiques. Cette figure 13 montre les variations du taux d'erreurs de bits (TEB) en fonction du rapport signal/bruit RSB. La figure 13 se place dans l'hypothèse de K = 5 utilisateurs avec N = 63. L'effet Doppler a été simulé par un écart par rapport à la porteuse de l'oscillateur local.

La courbe 50 se réfère à un procédé classique à un étage, sans suppression d'interférences. Les courbes 51 et 52 se rapportent à ce même procédé, mais avec deux effets Doppler différents, le premier avec un écart relatif de $10^{-6}$ à 2,45 GHz et la seconde avec un écart relatif de $10^{-5}$.

La courbe 60 se réfère à un procédé à suppression parallèle d'interférences à un seul étage de suppression parallèle d'interférences et les courbes 61, 62 au même procédé, mais avec les écarts de $10^{-6}$ et $10^{-5}$.

La courbe 70 se réfère à un procédé à deux étages de suppression parallèle d'interférences avec les courbes associées 71, 72 pour les écarts à $10^{-6}$ et $10^{-5}$.

Enfin, la courbe 80 marque la limite théorique de la technique à modulation différentielle de phase (DQPSK).

**Revendications**

**1.** Procédé de réception de signaux à étalement de spectre avec correction de décalage en fréquence, dans lequel :

- on reçoit un signal (I, Q) comprenant un préambule formé d'une suite de symboles connus étalés en fréquence par une séquence pseudo-aléatoire comprenant N chips, puis une suite de symboles d'information étalés en fréquence par ladite séquence pseudo-aléatoire,
- on forme un signal en bande de base à partir du signal reçu,
- on effectue une corrélation (F(I), F(Q)) entre le signal en bande de base et la séquence pseudo-aléatoire au moins dans la partie du signal correspondant aux symboles d'information pour obtenir un signal de corrélation (CORR(I), CORR(Q)),
- on effectue une démodulation (DD) du signal de corrélation pour obtenir un signal de démodulation (DOT, CROSS),
- on restitue les symboles d'information (d),

procédé dans lequel la correction de décalage en fréquence comprend les étapes suivantes :

    a.dans une première étape, on traite le signal de corrélation dans la partie correspondant au préambule, pour estimer ($EST_{dop}$) la période T de la modulation affectant ce signal en raison du décalage en fréquence et on élabore un signal correcteur ayant cette période estimée T,

    b.dans une seconde étape ($CC_{dop}$), on corrige le signal avant ou après corrélation dans la partie correspondant aux symboles d'information, à l'aide dudit signal correcteur,

ce procédé étant **caractérisé en ce que** :

- on divise le signal en bande de base en deux composantes, une première composante I et une seconde composante Q en quadrature avec la première et on effectue une corrélation sur chacune de ces composantes pour obtenir deux composantes de corrélation CORR(I) et CORR (Q),
- on calcule un signal DOT qui est la somme de deux produits directs d'échantillons successifs des composantes de corrélation, et un signal CROSS qui est la différence de deux produits croisés d'échantillons successifs des composantes de corrélation,
- pour estimer ($EST_{dop}$) la période T de la modulation, on calcule (20) le rapport entre un signal CROSS et un signal DOT à chaque période symbole, on calcule (22) l'arc dont la tangente est égale à ce rapport, on calcule (24) l'inverse de cet arc et on multiplie (26) par πN/2.

2. Procédé selon la revendication 1, dans lequel, on filtre au préalable les signaux CROSS et DOT par un filtrage passe bas.

3. Procédé selon les revendications 1 ou 2, dans lequel, pour former le signal de correction, on forme (30) une première composante (Cc) égale à cos(πx/2T) et une seconde composante (Cs) égale à sin(πx/2T), où x est une unité de temps égale à kN, k est un nombre prenant toutes les valeurs entières successives et N le nombre de chips de la séquence pseudo-aléatoire, et où T est la période de modulation.

4. Procédé selon la revendication 3, dans lequel on corrige ($CC_{dop}$) les signaux en bande de base de la première et/ou de la seconde voies, soit $I_{dop}$ et $Q_{dop}$, en calculant une première quantité égale :

$$I_{dop}.\cos(\pi x/2T) + Q_{dop}.\sin(\pi x/2T),$$

ce qui donne un signal I propre à 1a première voie corrigé du décalage en fréquence et/ou en calculant une seconde quantité égale à :

$$Q_{dop}.\cos(\pi x/2T) - I_{dop}.\sin(\pi x/2T),$$

ce qui donne un signal Q propre à la seconde voie corrigée du décalage en fréquence.

5. Procédé selon la revendication 3, dans lequel on corrige ($CC_{dop}$) les signaux de corrélation de la première et/ou de la seconde voies, soit $CORR_{dop}(I)$ et $CORR_{dop}(Q)$ en calculant une première quantité égale à :

$$CORR_{dop}(I).\cos(\pi x/2T) + CORR_{dop}(Q).\sin(\pi x/2T),$$

ce qui donne un signal de corrélation CORR(I) propre à la première voie corrigé du décalage en fréquence et/ou en calculant une seconde quantité égale à :

$$CORR_{dop}(Q).\cos(\pi x/2T) - CORR_{dop}(I).\sin(\pi x/2T),$$

ce qui donne un signal de corrélation CORR(Q) propre à la seconde voie corrigé du décalage en fréquence.


**Patentansprüche**

1. Verfahren zum Empfangen von Spreizspektrumsignalen mit Korrektur des Frequenzversatzes mit folgenden Schritten:

- Empfangen eines Signals (I, Q) mit einer Präambel, gebildet durch eine Folge von bekannten Symbolen, frequenz-gespreizt durch eine N Impulse umfassende Pseudozufallssequenz, dann einer Folge von Informationssymbolen, frequenz-gespreizt durch die genannte Pseudozufallssequenz,
- Bilden bzw. Formen eines Basisband-Signals aufgrund des empfangenen Signals,
- Durchführen einer Korrelation (F(I), F(Q)) zwischen dem Basisband-Signal und der Pseudozufallssequenz wenigstens in dem Teil des Signals, der den Informationssymbolen entspricht, um ein Korrelationssignal (CORR(I), CORR(Q)) zu erhalten,

- Durchführen einer Demodulation (DD) des Korrelationssignals, um ein Demodulationssignal (DOT, CROSS) zu erhalten,
- Wiederherstellen der Informationssymbole (d).

wobei in diesem Verfahren die Frequenzversatz-Korrektur die folgenden Schritte umfasst:

a.in einem ersten Schritt verarbeitet man das Korrelationssignal in dem der Präambel entsprechenden Teil, um die Periode T der Modulation zu ermitteln ($EST_{dop}$) die dieses Signal aufgrund des Freqenzversatzes betrifft, und man arbeitet ein Korrektursignal aus, das diese ermittelte Periode T hat,
b.in einem zweiten Schritt ($CC_{dop}$) korrigiert man das Signal vor oder nach Korrelation in dem den Informationssignalen entsprechenden Teil mit Hilfe des genannten Korrektursignals,

dabei ist dieses Verfahren **dadurch gekennzeichnet:**

- **dass** man das Basisband-Signal in zwei Komponenten aufteilt, eine erste Komponente I und eine zur ersten Komponente um 90° phasenverschobene zweite Komponente Q, und dass man bei jeder dieser Komponenten eine Korrelation durchführt, um zwei Korrelationskomponenten CORR(I) und CORR(Q) zu erhalten,
- **dass** man ein Signal DOT berechnet, das die Summe zweier direkter Produkte sukzessiver Abtastwerte der Korrelationskomponenten ist, und ein Signal CROSS berechnet, das die Differenz zweier Kreuzprodukte sukzessiver Abtastwerte der Korrelationskomponenten ist,
- **dass** man, um die Periode T der Modulation zu bestimmen ($EST_{dop}$), bei jeder Symbolperiode das Verhältnis zwischen einem Signal CROSS und einem Signal DOT berechnet (20), man den Bogen berechnet, dessen Tangente gleich diesem Verhältnis ist (22), man den Umkehrwert dieses Bogens berechnet (24) und man mit $\pi N/2$ multipliziert (26).

2. Verfahren nach Anspruch 1, bei dem man die Signale CROSS und DOT vorher einem Tiefpassfiltern unterzieht.

3. Verfahren nach den Ansprüchen 1 oder 2, bei dem man zum Bilden des Korrektursignals eine erste Komponente (Cc) gleich $\cos(\pi x/2T)$ (30) und eine zweite Komponente (Cs) gleich $\sin(\pi x/2T)$ bildet, wo x eine Zeiteinheit gleich kN ist, k eine alle sukzessiven ganzen Werte umfassende Zahl ist und N die Anzahl der Impulse der Pseudozufallssequenz ist, und wo T die Modulationsperiode ist.

4. Verfahren nach Anspruch 3, bei dem man die Basisband-Signale des ersten und/oder des zweiten Kanals, also $I_{dop}$ und $Q_{dop}$, korrigiert ($CC_{dop}$) durch das Berechnen einer ersten Größe gleich:

$$I_{dop}.\cos(\pi x/2T) + Q_{dop}.\sin(\pi x/2T),$$

was ein für den ersten Kanal charakteristisches frequenzversatz-korrigiertes Signal I ergibt, und/oder durch das Berechnen einer zweiten Größe gleich:

$$Q_{dop}.\cos(\pi x/2T) - I_{dop}.\sin(\pi x/2T),$$

was ein für den zweiten Kanal charakteristisches frequenzversatz-korrigiertes Signal Q ergibt.

5. Verfahren nach Anspruch 3, bei dem man die Korrelationssignale des ersten und/oder des zweiten Kanals, also $CORR_{dop}(I)$ und $CORR_{dop}(Q)$, korrigiert ($CC_{dop}$) durch das Berechnen einer ersten Größe gleich:

$$CORR_{dop}(I).\cos(\pi x/2T) + CORR_{dop}(Q).\sin(\pi x/2T),$$

was ein für den ersten Kanal charakteristisches frsquenzversatz-korrigisrtes Korrelationssignal CORR(I) ergibt, und/oder durch das Berechnen einer zweiten Größe gleich:

$$CORR_{dop}(Q).\cos(\pi x/2T) - CORR_{dop}(I).\sin(\pi x/2T),$$

was ein für den zweiten Kanal charakteristisches frequenzversatz-korrigiertes Korrelationssignal CORR(Q) ergibt.

**Claims**

1. A method for receiving spectrum spreading signals with frequency shift correction, wherein:

   - a signal (I,O) is received comprising a preamble made up of a sequence of known symbols spread in frequency by a pseudo-random sequence, followed by a sequence of information symbols spread in frequency by said pseudo-random sequence,
   - a base band signal is formed from the received signal,
   - a correlation (F(I), F(Q)) is performed between the base band signal and the pseudo-random sequence at least in the portion of the signal corresponding to the information symbols in order to obtain a correlation signal (CORR(I), CORR(Q)),
   - a demodulation (DD) of the correlation signal is performed in order to obtain a demodulation signal (DOT, CROSS),
   - the information symbols (d) are restored,

   a method wherein the correction of the frequency shift comprises the following steps:

   a. in a first step, the correlation signal is processed in the portion corresponding to the preamble, in order to estimate ($EST_{dop}$) the modulation period T affecting this signal because of the frequency shift and a correcting signal with this estimated period T is elaborated,
   b. in a second step ($CC_{dop}$), the signal is corrected before or after correlation in the portion corresponding to the information symbols, by means of said correcting signal,

   this method being **characterized in that**:

   · the base band signal is divided into two components, a first component I and a second component Q in, quadrature with the first and a correlation is performed on each of these components in order to obtain two correlation components CORR(I) and CORR(Q),
   · a DOT signal is calculated which is the sum of two direct products of successive samples of the correlation components, as well as a CROSS signal which is the difference between two crossed products of successive samples of the correlation components,
   · for estimating ($EST_{dop}$) the period T of the modulation, the ratio between a CROSS signal and a DOT signal is calculated (20) at each symbol period, the arc for which the tangent is equal to this ratio is calculated (22), the inverse of this arc is calculated (24) and multiplied by $\pi N/2$.

2. The method according to claim 1, wherein the CROSS and DOT signals are first filtered by low pass filtering.

3. The method according to claim 1 or 2, wherein, in order to form (30) the correction signal, a first component (Cc) equal to $\cos(\pi x/2T)$ and a second component (Cs) equal to $\sin(\pi x/2T)$ are formed, wherein x is a unit of time equal to kN, k is a number assuming all the successive integer values and N is the number of items of the pseudo-random sequence, and wherein T is the modulation period.

4. The method according to claim 3, wherein the base band signals of the first and/or second channels, i.e. $I_{dop}$ and $Q_{dop}$, are corrected ($CC_{dop}$) by calculating a first quantity equal to:

$$I_{dop}.\cos(\pi x/2T) + Q_{dop}.\sin(\pi x/2T),$$

which gives a signal I specific to the first channel corrected from the frequency shift and/or by calculating a second quantity equal to:

$$Q_{dop}.\cos(\pi x/2T) - I_{dop}.\sin(\pi x/2T),$$

which gives a signal Q specific to the second channel corrected from the frequency shift.

**5.** The method according to claim 3, wherein the correlation signals of the first and/or second channels, i.e. $CORR_{dop}(I)$ and $CORR_{dop}(Q)$ are corrected ($CC_{dop}$) by calculating a first quantity equal to:

$$CORR_{dop}(I).\cos(\pi x/2T) + CORR_{dop}(Q).\sin(\pi x/2T),$$

which gives a correlation signal CORR(I) specific to the first channel corrected from the frequency shift and/or by calculating a second quantity equal to:

$$CORR_{dop}(Q).\cos(\pi x/2T) - CORR_{dop}(I).\sin(\pi x/2T),$$

which gives a correlation signal CORR(Q) specific to the second channel corrected from the frequency shift.

EP 1 142 147 B1

E(I)o (I) → CAN(I) → F(I) → (CORR(I)) → DD → (DOT) → Inf/H → (Sinf) → D → (d) o S

E(Q)o (Q) → CAN(Q) → F(Q) → (CORR(Q)) → (CROSS)

(SH)

FIG. 1

FIG. 2

FIG. 3

FIG. 4

FIG. 5

$(I_{dop}$ ou $CORR_{dop}(I))$

$(I_{dop})$ → $F(I)$ → $(CORR_{dop}(I))$ → DD → $(DOT_{dop})$ → $EST_{dop}$ → $cos(\pi x/2T)$ → $CC_{dop}$ → $(I$ ou $CORR(I))$

$(Q_{dop})$ → $F(Q)$ → $(CORR_{dop}(Q))$ → $(CROSS_{dop})$ → $sin(\pi x/2T)$ → $(Q$ ou $CORR(Q))$

$(Q_{dop}$ ou $CORR_{dop}(Q))$

FIG. 6

FIG. 7

FIG. 8

CORR(I)

20

0

-20

FIG. 9 A

0   400   800   1200   $x$

CORR(I)

20

0

-20

FIG. 9 B

0   400   800   1200   $x$

CORR(Q)

20

0

-20

FIG. 10 A

0   400   800   1200   $x$

CORR(Q)

20

0

-20

FIG. 10 B

0   400   800   1200   $x$

FIG. 11 A

FIG. 11 B

FIG. 12 A

FIG. 12 B

FIG. 13

FIG. 14

EP 1 142 147 B1